# EUROPEAN PATENT APPLICATION

(11) **EP 3 258 391 A1**
(43) Date of publication of application: **20.12.2017**
(21) Application number: 16174444.6
(22) Date of filing: 14.06.2016
(51) Int. Cl.: G06F 17/30

(54) **MEANS FOR DETERMINING PAST ACTIVITIES OF A USER AND TRIGGERING AN ACTION ACCORDINGLY**

(71) Applicant: SNIPS, 75002 Paris (FR)
(72) Inventor: HINDI, Rand, 75008 Paris (FR); DUREAU, Joseph, 92110 Clichy (FR); KERKHOVE, Colas, 75019 Paris (FR)
(74) Representative: Verriest, Philippe

(57) **Abstract**

Method for triggering, on a device, an action according to past activities of a user, characterized in that it comprises the following steps: during a first step (S100), determining a set of historical information related to past activities of the user, according to at least one sources of historical data available through the device (10); during a second step (S200), determining a timeline of past activities of the user, according to the set of historical information; during a third step (S300), triggering an action on the device, according to the timeline of past activities of the user; wherein during the second step S200, the timeline of the past activities of the user is determined by: determining (S210) a first list (L1) of important places where the user went previously, according to the set of historical information; determining (S220) a second list (L2) of likely complete visits for which at least an associated period and at least an associated location have been identified, according to the set of historical information; determining (S230) a third list (L3) of candidate visits for which at least a hint of an associated period and at least a hint of an associated location have been identified, according to the set of historical information; for each candidate visit of the third list (L3), obtaining a candidate place associated to said candidate visit; searching for an important place of the first list (L1) matching the candidate place; if an important place of the first list (L1) matches the candidate place, replacing, in said candidate visit, the candidate place by said important place, and moving said the candidate visit from the third list (L3) to the second list (L2) of likely complete visits; determining (S250) the timeline of the past activities of a user, according to the second list (L2) of likely complete visits.

## Description

The present invention generally relates to automated devices, such as computers, data exploration devices, mobile devices, and navigation systems. More particularly, the invention relates to means for determining past activities of a user and triggering an action accordingly.

Artificial intelligence algorithms are implemented in a broad variety of automated intelligent devices. For instance, artificial intelligence algorithms are commonly used in navigation devices, in recommendations and/or search systems, in devices provided with adaptive interfaces. Artificial intelligence algorithms typically require the access to a large amount of data to reach an acceptable level of reliability and performances.

In numerous situations, having access to a large amount of information related to past activities of a user is highly beneficial for improving the service provided by an automated intelligent device. However, due to very limited availability of information related to past activities of the user, automated intelligent devices are generally constrained to collect and process data related to the current activity of the user only, possibly storing said data in a model and/or in a database. As a consequence, automated intelligent devices suffer from a blank page symptom: when the automated intelligent device is employed for the first time by the user, it cannot provide any useful service since no relevant data are available.

Moreover, the artificial intelligence algorithms implemented by automated intelligent devices are affected by a snowball effect: the more it knows, the more it can learn. Consequently, the efficiency of said automated intelligent devices are limited during the early stages of their exploitation by the user.

It is therefore desirable to provide means, embeddable in an automated intelligent device, adapted to supply reliable information related to past activities of a user, including from the first time said user starts using said automated intelligent device and onwards, in order to significantly improve the knowledge and the ability to learn of said automated intelligent device.

To that end, according to a first aspect, the present invention concerns a method for triggering, on a device, an action according to past activities of a user. The method comprises the following steps:
- during a first step, determining a set of historical information related to past activities of the user, according to at least one source of historical data available through the device;
- during a second step, determining a timeline of past activities of the user, according to the set of historical information;
- during a third step, triggering an action on the device, according to the timeline of past activities of the user
wherein, during the second step, the timeline of the past activities of the user is determined by:
- determining a first list of important places where the user went previously, according to the set of historical information;
- determining a second list of likely complete visits for which at least an associated period and at least an associated location have been identified, according to the set of historical information;
- determining a third list of candidate visits for which at least a hint of an associated period and at least a hint of an associated location have been identified, according to the set of historical information;
- for each candidate visit of the third list,
   ∘ obtaining a candidate place associated to said candidate visit;
   ∘ searching for an important place of the first list matching the candidate place;
   o if an important place of the first list matches the candidate place, replacing, in said candidate visit, the candidate place by said important place, and moving said the candidate visit from the third list to the second list of likely complete visits;
- determining the timeline of the past activities of a user, according to the second list of likely complete visits.

During the second step, by replacing the candidate place by said important place when they match, it is possible to determine the location of candidate visits more accurately, and to strengthen the probability that the visit actually happened in the identified place.

Important places are places in which a strong evidence that the user has been to said place may be obtained. The first list of important places may be determined using sources of historical data available through the automated intelligent device 10. More particularly, the first list of important places may be determined by obtaining:
- places related to addresses stored in an address book accessible through the automated intelligent device; and/or,
- places associated to calendar events of a personal calendar accessible through the automated intelligent device; and/or,
- places in which transactions happened - bar, restaurant, movie theatre, etc; and/or,
- places mentioned in informal communications;
- etc.

Likely complete visits are visits for which sufficient information - for example at least a period and a location - may have been retrieved reliably. The second list of likely complete visits may be determined using sources of historical data available through the automated intelligent device 10. More particularly, the second list of likely complete visits may be determined by obtaining:
- from calendar events of the user's personal calendar in which a location was specified; and/or,
- from records of transaction that occured in a specified places-bar, restaurant, movie theatre, etc;
- etc.

Candidate visits relate to visits for which hints of time and locations of where the user may have been in the past could have been obtained, but for which uncertainty remains regarding the exact location of the visit, or on the fact that the visit actually took place. The third list of candidate visits may be determined using sources of historical data available through the automated intelligent device. The third list of candidate visits may be determined by obtaining:
- calendar events coming from other sources than the user's personal calendar in which a location was specified; and/or,
- media - pictures or movies for instance - for which a location is provided; and/or,
- trip receipts for which an estimated departure and arrival estimated location is provided; and/or,
- etc.

An important place of the first list may be considered as matching a candidate place if said important place is distant from said candidate place of less than a distance-matching threshold, for example less than 50 meters.

During the third step, the action may comprise the execution of steps of a method using an artificial intelligence algorithms, relying on the knowledge of the timeline of the past activities of the user. The action may be related to a navigation service, a recommendation and/or search service, or a service to adapt a user-interfaces. The device may be a mobile phone, a laptop, a tablet, a computer, etc. The term 'timeline' refers to a chronological ordered set of events. More particularly, the timeline of past activities of the user allows determining in which places the user has been in the past, at what times, and for what duration.

Thanks to the invention, it is possible to obtain a high level of accuracy and reliability. Quantity of the historical data accessible on the device is typically high, and potential difficulties that may arise when interpreting and crossing information from these sources. Moreover the one or more sources of historical data may convey isolated information about what the user has done, at given point in time. By determining the timeline of past activities of the user, according to a plurality of historical information obtained from one or different sources, it is possible to extrapolate reliably the estimation construction of the past timeline of the user.

he at least one source of historical data may comprise a source of time based events, stored by or accessible through the device. A source of time based events may be a means for storing and/or accessing to calendar events related to the user, like a module for managing planning of a user. The historical information related to past activities of the user determined according to the source of time based events may be filtered so as to keep only:
- historical data extracted from a personal calendar of the user; and/or,
- historical data comprising information related to a location.

The historical information related to past activities of the user determined according to the source of time based events may be filtered so as to keep only historical data comprising information related to a location that and meeting a criteria based on the likeliness that the user participated to the corresponding event.

The likeliness of participation of the user to an event can be, at least partly, determined by considering how the event has been registered. For example, it is likely that a user participated in an event he entered in his personal calendar. Participation to events originating from social networks, for example, may be considered less reliable. In addition, a calendar event may be meant to describe remote communications-e.g. phone conference with a given person. Identifying specific keywords-e.g. call, etc-is a way to identify calendar events that bring no information regarding where the user is.

The at least one sources of historical data may comprise a source of transaction records, stored by or accessible through the device. A transaction record refers to either receipt the user may have received by e-mail - receipts from a service provider, a restaurant or other reservations-or that may have been collected through a receipt scanning application, through an Application Programming Interface or a banking service. The historical information related to past activities of the user determined according to the source transaction records may be filtered so as to keep only historical data comprising information related to a location.

The at least one source of historical data may comprise a source of media, stored by or accessible through the device. Media can be pictures or movies stored/accessible by mobile or desktop applications. Such Media may include an indication on location, for instance through a geotag present in the media file. Media may have been uploaded by the user from a specialized device - he may have recorded it with his device. Media may have been received through a messaging application or a social network application. The historical information related to past activities of the user determined according to the source of media may be filtered so as to keep only historical data related to media produced by the device or another device associated to the user.

The at least one source of historical data may comprise a source of informal communications, stored by or accessible through the device. Informal communications can be e-mails, chats, etc. By informal, it should be understood non-commercial communications. The historical information related to past activities of the user determined according to the source of informal communication may be filtered so as to keep only historical data comprising information related to a location and a date.

According to a second aspect, the present invention also relates to a computer program that can be downloaded from a communication network and/or stored on a medium. This computer program comprises instructions for causing implementation of the method according to the first aspect, when said program is run by the processor.

According to a third aspect, the present invention also relates to information storage means, storing a computer program comprising a set of instructions causing implementation of the method according to the first aspect, when the stored information is read from said information storage means and run by a processor.

According to a fourth aspect, the present invention also concerns a device adapted to implement the method according to the first aspect. The mobile device comprises:
- means for determining a first set of historical information related to past activities of a user, according to at least two sources of historical data through the device;
- means for determining a timeline of past activities of the user, according to the first set of historical information;
- means for triggering an action on the device, according to the timeline of past activities of the user.

The means for determining a timeline of past activities of the user, according to the first set of historical information, may be configured to:
- determine a first list of important places where the user went previously, according to the set of historical information;
- determine a second list of likely complete visits for which at least an associated period and at least an associated location have been identified, according to the set of historical information;
- determine a third list of candidate visits for which at least a hint of an associated period and at least a hint of an associated location have been identified, according to the set of historical information;
- for each candidate visit of the third list,
   ∘ obtain a candidate place associated to said candidate visit;
   o search for an important place of the first list matching the candidate place;
   o if an important place of the first list matches the candidate place, replace, in said candidate visit, the candidate place by said important place, and move said the candidate visit from the third list to the second list of likely complete visits;
- determine the timeline of the past activities of a user, according to the second list of likely complete visits.

The characteristics of the invention will emerge more clearly from the following description of an example of an embodiment of the invention, said description being made with reference to the accompanying drawings, among which:
Fig. 1 schematically represents architecture of a mobile device adapted to implement the method according to the present invention;
Fig. 2 schematically represents a method for determining information related to past activities of a user.
Fig. 3 schematically represents sub-steps of the aggregation step, for determining the timeline of the past activities of a user, according to an embodiment.

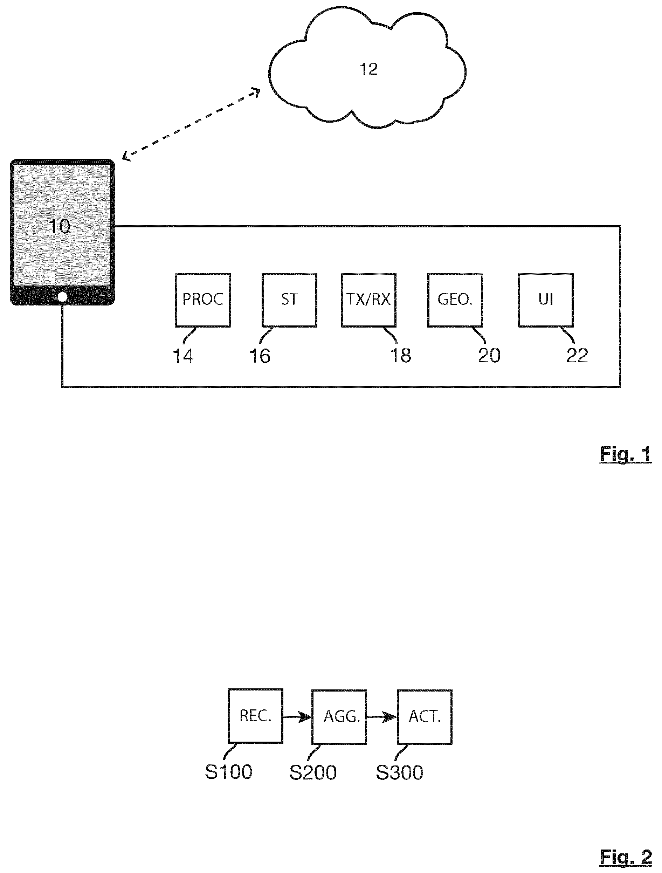

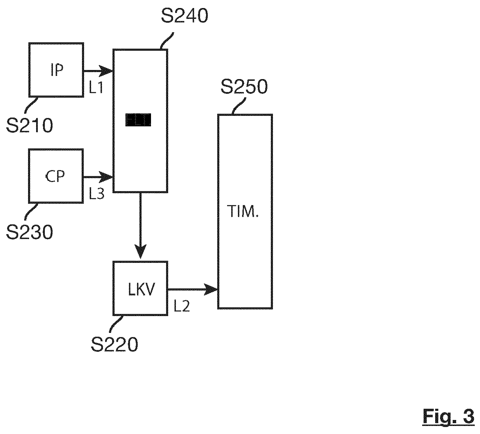

Fig. 1 schematically represents an automated intelligent device 10 in which a module according to the present invention may be implemented. In the embodiment represented on Fig. 1, the automated intelligent device 10 is a telecommunication mobile device adapted to access wirelessly to a communication network 12. The automated intelligent device 10 further comprises a processing module 14, for example a module provided with at least one Central Processing Unit and a Random-Access Memory. The automated intelligent device 10 further comprises storage means 16, for example a Hard-Drive and/or a solid-state memory, for storing data and allowing the processing module 14 to read and/or write said data. The automated intelligent device 10 includes at least one communication interface 18 adapted to allow wireless access to the communication network 12. In one embodiment, the communication network 20 is coupled to the Internet. The automated intelligent device 10 further comprises a geolocalization module 20 coupled to the processing module and configured to allow the determination of the current geographical position of the automated intelligent device 10 when turned on and/or activated. The geolocalization module 20 may comprise means for determining the current geographical position using GPS, Galileo, beacons and/or WIFI means. The geolocalization module 20 is adapted to deliver a stream of data related to the current location of the mobile device in real time. Data representing the current location comprise typically information related to the latitude, information related to the longitude and an associated level of uncertainty-typically a distance in metres from the estimated latitude and longitude, representing two standard deviations. The automated intelligent device 10 further comprises a user-interface 22, provided for example with a touch-sensitive screen, sensors and an audio playback and recording interface. The processing module 14 is capable of executing instructions. The instructions form one computer program that causes the processing module 14 to perform some or all of the steps of the method described hereafter with regard to figures 2 and 3. The automated intelligent device 10 is typically adapted to implement an artificial intelligence algorithm relying on the knowledge of past activities of a user to provide a service, such a navigation service, a recommendation and/or search service, an adaptive interface, etc.

Any and all steps of the method described hereafter with regard to figures. 2 and 3, may be implemented in software by execution of a set of instructions or program by a programmable computing machine, such as a PC (*Personal Computer*), a DSP (*Digital Signal Processor*) or a micro-controller; or else implemented in hardware by a machine or a dedicated component, such as an FPGA (*Field-Programmable Gate Array*) or an ASIC (*Application-Specific Integrated Circuit*).

Figure 2 schematically represents a method for determining reliably information related to past activities of a user, in order to significantly improve the knowledge and the ability to learn of the automated intelligent device 10. The method according to the invention allows reconstructing a timeline of past activities of a user, using sources of historical data available through the automated intelligent device 10. In the present description, the term 'timeline' refers to a chronological ordered set of events. For example, a historical data can be one or a combination of the following list: a structured written communication, an unstructured written communication, a picture, a movie, a calendar event, a transaction record, etc. More particularly, the timeline of past activities of a user allows determining in which places the user has been in the past, at what times, and for what duration. In the present description, the terms *'visit of a place'* refer to a period when the user was present in a given place, and can be described by the following information: a starting time of the visit, a duration of the visit, an estimated location-latitude and longitude-of the visit, and optionally an associated address of the visit, or an associated place's name of the visit. In addition, each visit can be optionally associated with a set of participants, in order to describe people the user has engaged with during said visit. A visit can also be associated with a given activity of the user, such as eating, drinking, being involved in a telecommunication conference, attending to a meeting, meeting people, etc. In particular, the method according to the invention allows gathering data useful for the automated intelligent device 10 to identify the familiarity of a user with a given situation-has the user already been here?-and/or to detect patterns in recurrent visits-does the user repeatedly spends time in a certain place?

Advantageously, the method can be performed according to a schedule - for instance every 15 seconds, and/or upon detection of specific events on the automated intelligent device 10 and/or at specific periods. The method can also be performed when a user launches a specific application or performs an action.

The method comprises a reconstruction step S100, an aggregation step S200 and an action step S300.

During the reconstruction step S100, historical information related to past activities of a user, are determined and/or gathered, using sources of historical data available through the automated intelligent device 10. More particularly, information related to past visits of a user, are determined and/or gathered, using sources of historical data available through the automated intelligent device 10. The historical information collected/determined during the reconstruction step S100 may be affected by inaccuracies and/or uncertainties. Each source of historical data is also typically partial or incomplete, or inaccurate. For example, considering a given past calendar event saved in the automated intelligent device 10, it is not always possible to determine if the user actually participated to said event.

The following table presents a non-exhaustive list of potential sources that can be used to determine historical data related to past visits of the user, with a probability of extracting from said source a given type of historical data:

| source / type of historical data | informal communications | pictures & movies | calendar events | transaction records |
|---|---|---|---|---|
| estimated location | NO | YES | NO | POSSIBLY |
| address | POSSIBLY | NO | POSSIBLY | POSSIBLY |
| place name | POSSIBLY | NO | POSSIBLY | POSSIBLY |
| starting time | POSSIBLY | POSSIBLY | YES | YES |
| duration | NO | POSSIBLY | YES | YES |
| participants | POSSIBLY | POSSIBLY | YES | NO |
| activity | POSSIBLY | NO | POSSIBLY | POSSIBLY |
| presence | LIKELY | POSSIBLY | POSSIBLY | YES |

Some common historical sources will now be described.

Calendar events, and more generally time based events, may be used as a historical source of information regarding the past activity of a user. Time based events are typically available through the automated intelligent device 10, for instance through means for storing and/or accessing to calendar events related to a user like a module for managing planning of a user. However, information comprised in a calendar event may be incomplete or inaccurate. It should also be taken into consideration that finding in the automated intelligent device 10 a time-based event does not necessarily imply that the user participated to it. The start time and duration of a time-based event are generally available, precise and reliable. However, the location of a time-based event is not always available, since the corresponding location field may be missing. Moreover, even when the location of a time-based event is available, the corresponding information may be difficult to interpret or unresolvable, bringing no information on the actual location, address or place name. Participants-i.e. people being present during a visit-are sometimes indicated, and, when available, are generally reliable information. Keywords may also be associated with a time-based event. For example, the presence of some keywords may be present in a field related to the event's description. Keywords can be useful to hint on the user's activity during the visit-e.g. eating, drinking, having a lunch/dinner, having a phone conference, attending to a meeting, etc. The likeliness of participation of the user to an event can be, at least partly, determined by considering how the event has been registered in the automated intelligent device 10. For example, it is likely that a user participated in an event he entered in his personal calendar. Participation to events originating from social networks, for example, may be considered less reliable. In addition, a calendar event may be meant to describe remote communications - e.g. phone conference with a given person. Identifying specific keywords-e.g. call, etc-is a way to identify calendar events that bring no information regarding where the user is.

Transaction records may be used as a historical source of information regarding the past activity of a user. A transaction record refers to either receipt the user may have received by e-mail-receipts from a service provider, a restaurant or other reservations-or that may have been collected through a receipt scanning application, through an Application Programming Interface or a banking service. The information contained in these records may, again, be incomplete or inaccurate. For example, a receipt from a provider which allows consumers with the automated intelligent device 10 to submit a trip request, comprises typically a pick-up and dropout estimated location: these addresses are generally the result of a geolocation of the automated intelligent device 10 and can be considered as imprecise, since it only hints towards the fact that the area is of interest for the user. In most of the other cases, a place name and an address is present and reliable in the transaction recorded. Indication on time-but not necessarily duration-is also generally given. However, no indication is generally given regarding the participants of the visit. The nature of the activity of the user can typically be derived from the transaction record. Contrary to calendar events, we can consider there is no ambiguity regarding the fact that the user participated to the corresponding visit. Transaction records represent a reliable and complete source of information regarding past data. However, and for this very reason, it is a source that is hard to access: banking services generally do not have an Application Programming Interface to access to this type of information, and users may be reluctant to share this information. E-mail is the most accessible source of information for transaction records. Records obtained through this channel are generally much sparser.

Media stored or accessible through the automated intelligent device 10 may be used as a historical source of information regarding the past activity of a user. More specifically media can be pictures or movies stored/accessible by mobile or desktop applications. Media may have been uploaded by the user from a specialized device - he may have recorded it with his device. Media may have been received through a messaging application or a social network application. Media are typically provided with metadata, such as metadata structured according to the exchangeable image file format (EXIF). Metadata associated with media typically comprises the following information:
- a geotag-for example a latitude and a longitude;
- a time stamp;

While geographic and time information are reliable and simple to interpret, information embedded in media is not sufficient in itself to determine whether the user was actually present when the media was captured. Moreover, since a lot of media are shared through social networks and messaging application, extracting information regarding the past activity of the user from this source is subject to noise. In order to take into consideration these drawbacks, it is possible to filter metadata extracted from media according to the device and/or the person who produced said media, for example by identifying whether the medium was taken with the user's phone, through the EXIF description. Media produced by one of the devices belonging to the user may then be considered as more reliable historical sources of information, as opposed to media produced by other devices. In addition, it is possible to filter metadata extracted from media according to folders structure used to store said media. It is possible to filter metadata extracted from media by identifying faces of people represented in the media and, incidentally, determining participants.

Informal communications stored or accessible through the automated intelligent device 10 may be used as a historical source of information regarding the past activity of a user. Informal communications can be e-mails, chats, etc. By informal, it should be understood non-commercial communications-commercial e-mails for example could be considered as a transaction record. Metadata embedded in informal communications can be used, for example by searching for the presence of metadata in the header of e-mails. The metadata in the header of e-mails can be linked data using JSON-LD linked data format, which is only used by commercial actors. Metadata embedded in informal communications can also be determined, by looking for the presence of typical elements, like tables, in the body of an informal communication. It is possible to filter metadata extracted from informal communications according to its origin, for example by taking into consideration only e-mails originating from a known contact of the user, for instance present in an address book). Historical data can be determined by filtering informal communications to extract geographical information likes addresses, and time-related information like dates. Because dates and addresses have specific formats, said historical data are easy to identify. Other historical data such as place names can also be derived through the analysis of informal communications. The indications on time and location of potential past visits of a user extracted from informal communications are subject to interpretation errors. Places at time can be referred to in different contexts than the one of two people setting out a meeting.

During the aggregation step S200, information related to past activities of a user, obtained during the reconstruction step S100, are filtered and aggregated to determine a timeline of the past activities of a user.

As previously discussed, information collected and/or determined from historical sources during the reconstruction step S100 are heterogenous, may be incomplete, and/or may be affected by various levels of uncertainty and/or errors. Accumulating visits derived from each of the sources would yield to an extremely noisy timeline of the past activities of a user.

During the aggregation step S200, information related to past activities of a user, obtained during the reconstruction step S100, are cross-referenced, so as to reconstruct a more reliable timeline of the past activities of a user. Advantageously, information related to past activities of a user, obtained during the reconstruction step S100, are only taken into consideration for the reconstruction of the timeline of the past activities of a user, if said information meet any one or a combination of the following criteria:
- for information related to calendar events, said information originates from the user's personal calendar, and/or comprise a parsable and precise location field;
- for information related to calendar events, said information doesn't originate from the user's personal calendar but from other sources, and comprise a location field that matches a location that has appeared at least once in information extracted/determined from other historical sources-informal communications, transaction records, etc;
- for information related to calendar events, said information doesn't originate from the user's personal calendar but from other sources, and comprise a location field that matches a location close to an area of interest of the user-for example a pick-up/dropout location in a trip request sent by the user, or a picture or movie geotag;

- for information related to transaction records, said information refers to a reservation-restaurant, show, movie, in which a parsable and precise location can be identified;
- for information related to transaction records, said information refers to a trip- in a taxi or a public transportation for example, in which the start and end, indicated by a pick-up location, are close to an address or place name mentioned in informal communications or in an existing visit;
- for information related to media, the media from which information is determined/extracted were produced from a device belonging to/associated with the user;
- for information related to media, the user has been identified in the media from which information is determined/extracted;
- for information related to media, the media from which information is determined/extracted is associated with a location information that is close from an address or place name mentioned in an informal communication or in an existing visit;
- for information related to informal communications, said information relate to an address or place and a date.

In an embodiment, during the aggregation step S200, information related to past activities of a user, obtained during the reconstruction step S100, are used to identify places where the user stays repeatedly, in particular his home and/or his workplace. Said places may be in particular identified, according to information related to past activities of a user, obtained during the reconstruction step S100, by identifying repetitive pick-up or drop-out locations, extracted in particular from trip receipts. Said places may be in particular identified, according to information related to past activities of a user, obtained during the reconstruction step S100, by determining delivery addresses for online purchases. The identification of the user's home and/or work may be used to reconstruct the timeline of the past activities of a user, during the step S200.

In an embodiment illustrated by Figure 3, during the aggregation step S200, the timeline of the past activities of a user are determined by:
- in a substep S210, determining a list L1 of important places where the user went previously, according to information related to past activities of a user, obtained during the reconstruction step S100;
- in a substep S220, determining a list L2 of likely complete visits for which at least an associated period and at least an associated location have been identified, according to information related to past activities of a user, obtained during the reconstruction step S100;
- in a substep S230, determining a list L3 of candidate visits for which at least a hint of an associated period and at least a hint of an associated location has been identified, according to information related to past activities of a user, obtained during the reconstruction step S100;
- in a substep S240, for each candidate visit of the list L3,
   ∘ obtaining a candidate place associated to said candidate visit;
   o searching for an important place of the list L1 matching the candidate place;
   o if an important place of the list L1 matches the candidate place, replacing, in said candidate visit, the candidate place by said important place, and moving said the candidate visit to the list L2 of likely complete visits;
- in a sub-step S250, determining the timeline of the past activities of a user, according to the list L2 of likely complete visits.

Important places are places in which a strong evidence that the user has been to said place may be obtained. The list L1 of important places may be determined using sources of historical data available through the automated intelligent device 10. More particularly, the list L1 of important places may be determined by obtaining:
- places related to addresses stored in an address book accessible through the automated intelligent device 10; and/or,
- places associated to calendar events of a personal calendar accessible through the automated intelligent device 10; and/or,
- places in which transactions happened - bar, restaurant, movie theatre, etc; and/or,
- places mentioned in informal communications;
- etc.

Likely complete visits are visits for which sufficient information - for example at least a period and a location - may have been retrieved reliably. The list L2 of likely complete visits may be determined using sources of historical data available through the automated intelligent device 10. More particularly, the list L2 of likely complete visits may be determined by obtaining:
- from calendar events of the user's personal calendar in which a location was specified; and/or,
- from records of transaction that occured in a specified places-bar, restaurant, movie theatre, etc;
- etc.

Candidate visits relate to visits for which hints of time and locations of where the user may have been in the past could have been obtained, but for which uncertainty remains regarding the exact location of the visit, or on the fact that the visit actually took place. The list L3 of candidate visits may be determined using sources of historical data available through the automated intelligent device 10. The list L3 of candidate visits may be determined by obtaining:
- calendar events coming from other sources than the user's personal calendar in which a location was specified; and/or,
- media - pictures or movies for instance - for which a location is provided; and/or,
- trip receipts for which an estimated departure and arrival estimated location is provided; and/or,
- etc.

During the substep S240, an important place of the list L1 may be considered as matching the candidate place if said important place is distant from said candidate place of less than a distance-matching threshold, for example less than 50 meters.

An exemplary execution of the sub-steps of the aggregation step S200 for determining the timeline of the past activities of a user will now be describded. It is likely that a user has mentioned his home address in a message, has some calendar events in his personal calendar related to meetings happening at his office, or at places he goes to for professional reasons. Also, looking at receipts found in his emails or in any transaction records tells us the bars, restaurants, shops and movie theatre he goes to. Lastly, his address book probably comprises home or work addresses for his contacts. All of these places are important places for the user, and consequently may be added to the list L1 of important places.

Moreover, it is usual that a user enters professional events in their calendar. Conditioned on the fact that the user specified the location of these events, professional events may be added to the list L2 of likely complete visits.

In addition, historical sources may give further hints about places that could be added to the list L3 of candidate visits. For example, parties or events may have been flagged by the user on social networks as "I'm interested in ", or as "I participate". However, it is observed that subscribing to an event on a social network doesn't necessarily imply you're going to attend to it. If they happen at places where the user have been previously, it may be possible to add said places to the list L2 of likely complete visits.

In addition, pictures and movies taken with a phone during a family event, holidays, or at a party may be used to obtain an estimated longitude and latitude where the user was, as well as an estimated period over which the user may have been there. If these estimated locations are close from one important place of the list L1, the corresponding visits may be added to the list L2 of likely complete visits.

Moreover, receipts related to transportation fees may have been received in informal communications, for example in e-mails. Receipts typically comprise an approximate address of the departure place from where the user left and an approximate address of the destination place where the user went to. It is then likely that the used visited the departure place, and the destination place. However, the locations may need to be further confirmed before being added to the list L2 of likely complete visits, by checking whether the departure place and the destination place are close from an important places of the list L1.

During the action step S300, according to the timeline of the past activities of a user determined during the step S200, at least one action is triggered and executed by the automated intelligent device 10 and optionally by other devices coupled to the automated intelligent device 10 and accessible through the communication network 12, such as a remote server or a local connected object. The at least one actions may comprise the execution of steps of a method using an artificial intelligence algorithms, relying on the knowledge of the timeline of the past activities of a user determined during the step S200, to provide a service. The one or more actions may be related to a navigation service, a recommendations and/or search service, or a service to adapt a user-interfaces.

The at least one action triggered and executed by the automated intelligent device 10, according to the timeline of the past activities of a user determined during the step S200, may relate to an action where it is necessary or advantageous to obtain:
- where a user lives and works with high probability, as well as when he usually goes to his other important places;
- the frequency at which the user goes to different types of places - like restaurants, for example action related to profiling and recommendations making;
- who are the contacts in the address book of the user he regularly visits, and/or to determine the nature of the relationships between them;
- an interpretation of an estimated location of a stop given by the geolocation module, using place association;
- a prediction of the probability for the user to attend a given calendar event;
- a prediction of the next place the user are going to go to.

## Claims

1. Method for triggering, on a device, an action according to past activities of a user, **characterized in that** it comprises the following steps:
- during a first step (S100), determining a set of historical information related to past activities of the user, according to at least one sources of historical data available through the device (10);
- during a second step (S200), determining a timeline of past activities of the user, according to the set of historical information;
- during a third step (S300), triggering an action on the device, according to the timeline of past activities of the user;
wherein during the second step S200, the timeline of the past activities of the user is determined by:
- determining (S210) a first list (L1) of important places where the user went previously, according to the set of historical information;
- determining (S220) a second list (L2) of likely complete visits for which at least an associated period and at least an associated location have been identified, according to the set of historical information;
- determining (S230) a third list (L3) of candidate visits for which at least a hint of an associated period and at least a hint of an associated location have been identified, according to the set of historical information;
- for each candidate visit of the third list (L3),
∘ obtaining a candidate place associated to said candidate visit;
o searching for an important place of the first list (L1) matching the candidate place;
o if an important place of the first list (L1) matches the candidate place, replacing, in said candidate visit, the candidate place by said important place, and moving said the candidate visit from the third list (L3) to the second list (L2) of likely complete visits;
- determining (S250) the timeline of the past activities of a user, according to the second list (L2) of likely complete visits.

2. Method according to claim 1, wherein the at least one source of historical data comprises a source of time based events, stored by or accessible through the device.

3. Method according to claim 2, wherein the historical information related to past activities of the user determined according to the source of time based events is filtered so as to keep only:
- historical data extracted from a personal calendar of the user; and/or,
- historical data comprising information related to a location.

4. Method according to claim 2, wherein the historical information related to past activities of the user determined according to the source of time based events is filtered so as to keep only historical data comprising information related to a location and meeting a criteria based on the likeliness that the user participated to the corresponding event.

5. Method according to any one of the preceding claims, wherein the at least one source of historical data is a source of transaction records, stored by or accessible through the device.

6. Method according to claim 5, wherein the historical information related to past activities of the user determined according to the source transaction records is filtered so as to keep only historical data comprising information related to a location.

7. Method according to any one of the preceding claims, wherein the at least one source of historical data is a source of media, stored by or accessible through the device.

8. Method according to claim 7, wherein the historical information related to past activities of the user determined according to the source of media is filtered so as to keep only historical data related to media produced by the device or another device associated to the user.

9. Method according to any one of the preceding claims, wherein the at least one source of historical data is a source of informal communications, stored by or accessible through the device.

10. Method according to claim 9, wherein the historical information related to past activities of the user determined according to the source of informal communication is filtered so as to keep only historical data comprising information related to a location and a date.

11. Computer program comprising instructions for causing implementation of the method according to any one of the claims 1 to 10, when said program is run by the processor.

12. Support for storing a computer program comprising a set of instructions causing implementation of the method according to any one of the claims 1 to 10, when the stored information is read from said support and run by a processor.

13. Device (10) **characterized in that** it comprises:
- means for determining a first set of historical information related to past activities of a user, according to at least one source of historical data through the device (10);
- means for determining a timeline of past activities of the user, according to the first set of historical information;
- means for triggering an action on the device, according to the timeline of past activities of the user;
wherein the means for determining a timeline of past activities of the user, according to the first set of historical information, are configured to:
- determine (S210) a first list (L1) of important places where the user went previously, according to the set of historical information;
- determine (S220) a second list (L2) of likely complete visits for which at least an associated period and at least an associated location have been identified, according to the set of historical information;
- determine (S230) a third list (L3) of candidate visits for which at least a hint of an associated period and at least a hint of an associated location have been identified, according to the set of historical information;
- for each candidate visit of the third list (L3),
∘ obtain a candidate place associated to said candidate visit;
o search for an important place of the first list (L1) matching the candidate place;
o if an important place of the first list (L1) matches the candidate place, replace, in said candidate visit, the candidate place by said important place, and move said the candidate visit from the third list (L3) to the second list (L2) of likely complete visits;
- determine (S250) the timeline of the past activities of a user, according to the second list (L2) of likely complete visits.
